# EUROPEAN PATENT SPECIFICATION

(11) **EP 1 921 346 B1**
(45) Date of publication and mention of the grant of the patent: **06.04.2011**
(21) Application number: 07120147.9
(22) Date of filing: 07.11.2007
(51) Int. Cl.: F16H 25/14

(54) **Device for transforming rotary motion into alternating rectilinear motion, in particular for pumps, preferably of the agricultural type and pump equipped with such a device.**
Vorrichtung zum Umwandeln von einer Drehbewegung in eine geradlinige Wechsel-Bewegung, insbesondere für Pumpen, vorzugsweise der landwirtschaftlichen Art, und einer Pumpe ausgerüstet mit einer solchen Vorrichtung.
Dispositif pour transformer un mouvement rotatif en linéaire, en particulier pour pompes, de préférence du type agricultural et pompe munie d'un tel dispositif.

(30) Priority: 10.11.2006 IT RE20060133
(43) Date of publication of application: 14.05.2008
(73) Proprietor: Idromeccanica Bertolini S.p.A., 42100 Reggio Emilia (IT)
(72) Inventor: Cuneo, Carlo Alberto, 56034, Pisa (IT)
(74) Representative: Gallo, Luca

(56) References cited:
- DE-A1- 3 929 382
- DE-A1- 4 032 302
- GB-A- 2 111 158
- US-A- 2 782 646
- US-A- 5 139 401
- US-A- 5 553 513

## Description

The object of the present invention is a device for transforming rotary motion into alternating rectilinear motion, in particular for pumps, preferably of the agricultural type.

A device for transforming rotary motion into alternating rectilinear motion and a pump comprising such a device are characterized by the features of independent claims 1 and 20.

Document US 2 782 646, which constitutes the closest prior art, shows a device according to the preamble of claim 1.

The present invention lends itself to being used in any field of industry in which it is necessary to convert and transform rotary motion into alternating rectilinear motion and/or vice-versa. In detail, the invention is intended for any kinematic mechanism provided with two or more mechanical members in a motion transmission relationship with each other, like for example pumps, and in particular agricultural pumps.

As known, the transformation of circular motion into alternating rectilinear motion and/or vice-versa is generally carried out by means of widely known systems, like for example the slider-crank mechanism.

The rotary thrusting crank, more commonly known as slider-crank mechanism, comprises a first member, known as a crank, set up to rotate about a predetermined axis, and a second member, known as a connecting rod, hinged on one side to the crank and guided along a rectilinear direction on the other side. The crank always describes a circumference together with the end of the connecting rod hinged to it, whereas the opposite end of the connecting rod describes a rectilinear trajectory according to alternate motion, said added end being hinged by means of a piston pin to a piston.

Although the aforementioned device for transforming rotary motion into alternating rectilinear motion achieves many tasks, the Applicant has found that it is nevertheless not exempt from some drawbacks and it can be improved in different ways.

A first drawback of the aforementioned device consists of the fact that as the piston pin has to be contained inside both the piston and the bottom of the connecting rod it is small in size with consequent high specific pressures in the areas of contact between connecting rod, piston pin and piston that require very efficient lubrication, with pressurised or splash lubricants.

A second drawback derives from the presence of the connecting rod that, due to its configuration, is notoriously bulky and always represents the weak point of the system.

More specifically, the Applicant has found that this solution, slider-crank, requires the use of appropriate lubricants that are disadvantageous were there to be a malfunction or damage that leads to the inevitable leakage and/or pouring into the surrounding environment.

The loss of lubricants becomes even more serious in sensitive environments, like for example on farms in which the breaking of normal agricultural pumps significantly jeopardises the ground or the surrounding farmland.

In fact, when a known agricultural pump, the mechanical members of which operate in an oil bath, breaks the surrounding ground is immediately polluted and its potential is frozen until the subsequent and necessary clean-up that substantially hits the costs that have to be paid by the land owners.

The purpose of the present invention is to solve the problems encountered in the prior art.

In said technical task an important purpose of the invention is to propose a device for transforming rotary motion into alternating rectilinear motion that is particularly compact and strong and equipped with a small number of constructive parts, in particular for pumps, preferably of the agricultural type according to what is described in the attached claims.

Now, as an indicative example and not for limiting purposes, we shall give a description of a device for transforming rotary motion into alternating rectilinear motion, illustrated in the attached drawings, in which:
- figure 1 is a perspective view, partially in section, of a device for transforming rotary motion into alternating rectilinear motion, in particular for pumps, preferably of the agricultural type, in accordance with the present invention;
- figure 2 is a perspective view, partially in section, of some components of the device according to the previous figure;
- figure 3 is a section of the device object of the present invention carried out according to the line III-III of figure 1;
- figure 4 is a perspective view of a detail of the device according to figures 1 and 3.

With reference to the quoted figures, a device for transforming rotary motion into alternating rectilinear motion, in particular for pumps, preferably of the agricultural type according to the present invention is wholly indicated with 1.

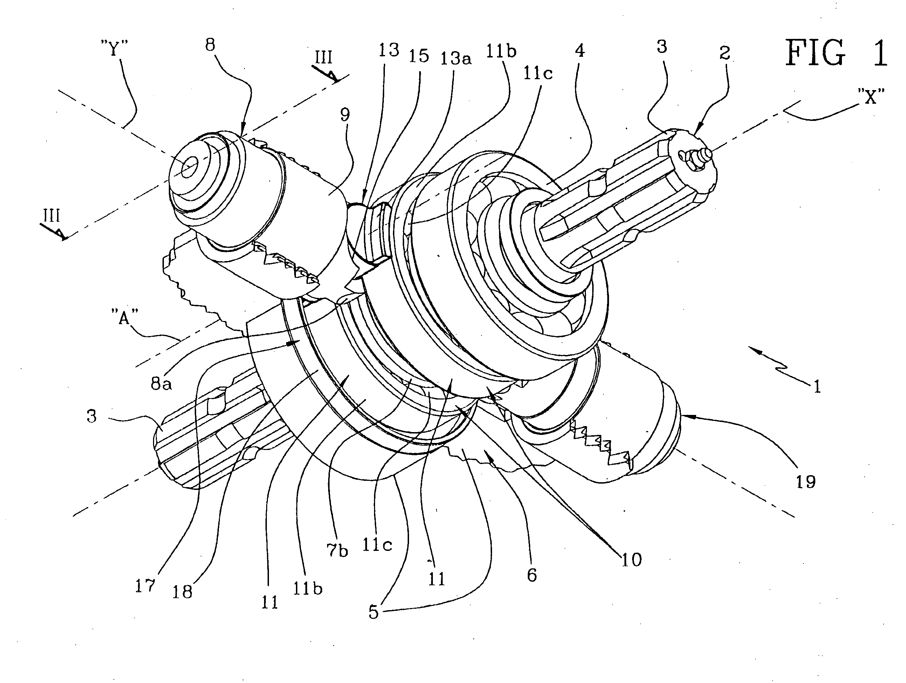

As can be seen in figures 1 to 3, the device 1 comprises a shaft 2 that can be made to rotate about its own longitudinal axis "X" by at least one actuator member (not represented as it is known). In order to allow the shaft to be rotated, it has opposite ends 3 suitably notched for the possible engagement of appropriate transmission members (not illustrated) of the aforementioned actuator.

Each end 3 of the shaft 2 has at least one respective support bearing 4, preferably of the ball bearing type, fitted onto it that supports the shaft 2 so that it can rotate with respect to a support structure 5 of the mechanism with which the device 1 is associated.

The ends 3 of the shaft 2 define a central portion 6 thereof at which at least one eccentric body 7 is engaged to rotate as a unit with the shaft 2 about the longitudinal axis "X".

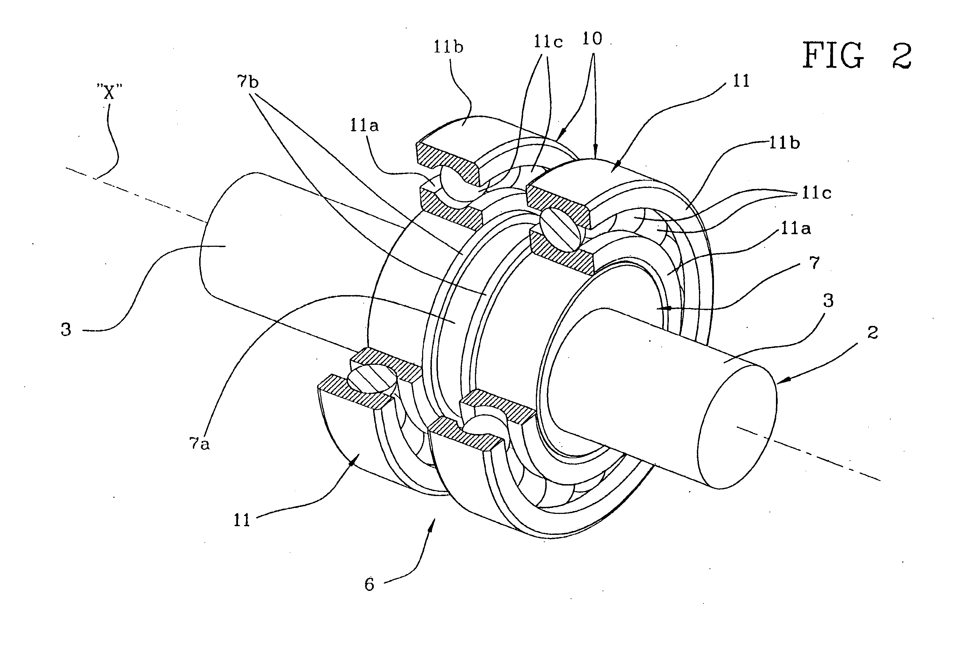

As can be seen in figure 2, the eccentric body 7 has a preferably circular cross section, eccentric with respect to the shaft 2 so as to project transversally from it farther on one side than the other. Advantageously, the eccentric body 7 is joined in one piece with the shaft 2 to constitute a single monoblock defined by three substantially cylindrical segments.

Preferably, the device 1 comprises at least one mobile member 8, advantageously a piston, operatively associated with the eccentric body 7 to translate along an axis of movement "Y", transversal with respect to the longitudinal axis "X" of the shaft 2. The axis of movement "Y" is set by a respective guide bushing 9 fixedly associated with the support structure 5 of the aforementioned mechanism.

The device 1 is also provided with rolling connection means 10 operatively arranged between the eccentric body 7 and the mobile member 8 to impart a displacement along the axis of movement "Y" following a corresponding rotation of the eccentric body 7.

Said mobile member 8 is engaged on said rolling connection means 10 through at least one connection pin 13, the latter having at least one support portion 14 abutting on said rolling connection means 10.

As illustrated in figures 1 to 3, the rolling connection means 10 comprise at least two rolling bearings 11 operatively arranged between the eccentric body 7 and the mobile member 8 through the connection pin 13 hinged in the mobile member.

Preferably, the rolling bearings 11 are spaced apart along a direction substantially parallel to the longitudinal axis "X" of the shaft 2, according to a measurement substantially equal to a central cylindrical area 7a of the eccentric body 7, defined by two corresponding circumferential protrusions 7b. The rolling bearings 11, together with the eccentric body 7, thus define at least one corresponding annular groove 12 for the engagement of the mobile member 8.

Going into detail, each rolling bearing 11 of the rolling connection means 10 comprises an inner ring 11a engaged at the eccentric body 7 to rotate as a unit with it about the longitudinal axis "X" of the shaft 2. Parallel to the inner ring 11a, an outer ring 11b also extends that is engaged with the mobile member 8 to move it along the axis of movement "Y", at least away from the longitudinal axis "X" of the shaft 2. A plurality of rolling elements 11c, preferably spherical, are arranged between the inner ring 11 a and the outer ring 11b, to allow a relative rotation between such rings 11a, 11b about a rotation axis "Z" substantially parallel to the longitudinal axis "X" of the shaft 2.

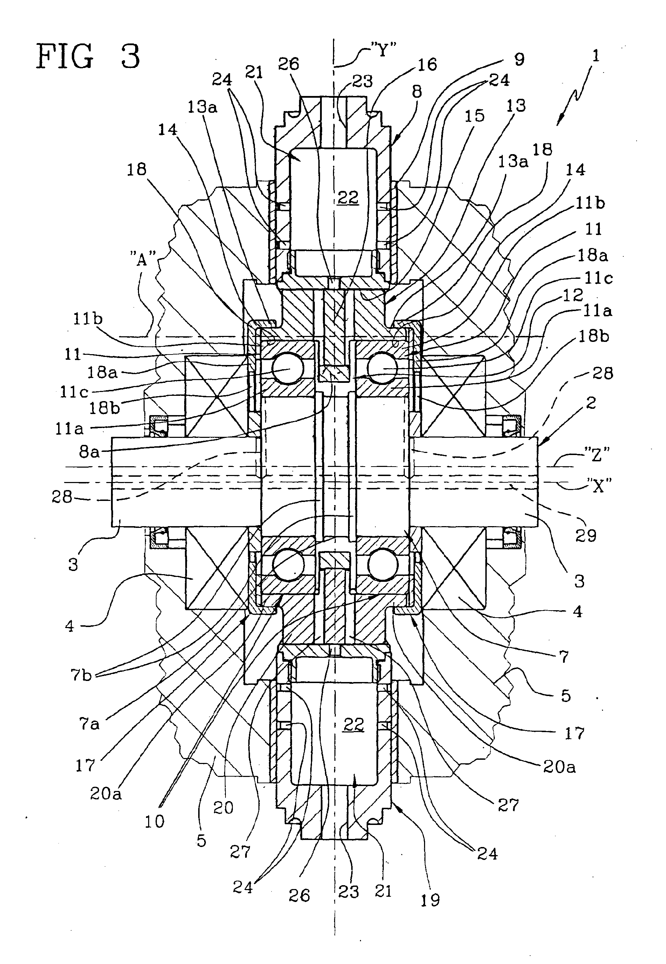

In detail, with particular reference to figure 3, the mobile member 8 engages the rolling bearings 11 through at least one connection pin 13. Advantageously, the connection pin 13 has at least one support portion 14 for each rolling bearing 11. Preferably, each support portion 14 is substantially shaped to fit together with the outer surface of the outer ring 11b of the corresponding rolling bearing 11.

Again with reference to figure 3, the connection pin 13 extends mainly parallel to the longitudinal axis "X" of the shaft 2 along a corresponding through opening 15 that is formed through the mobile member 8 transversally to the axis of movement "Y" of the latter.

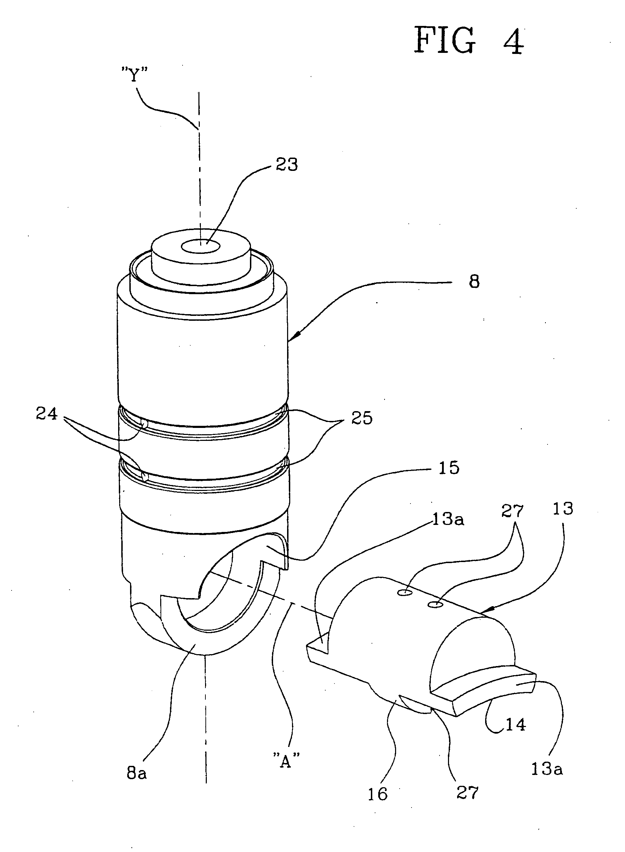

In detail, the connection pin 13 has at least one central portion 16 with a substantially circular section (figures 3 and 4) arranged between the support portions 14. The central portion 16 of the connection pin 13 is enveloped by a semi-annular appendix 8a of the mobile member 8 at least partially defining the through opening 15 thereof.

As can be seen in figures 1 and 3, the central portion 16 of the connection pin 13 and the semi-annular portion 8a of the mobile member 8 preferably lie at least partially inside the annular groove 12 defined by the rolling bearings 11, lying according to a plane substantially perpendicular to the longitudinal axis "X" of the shaft 2.

Advantageously, the connection pin 13 is free to rotate inside the through opening 15 of the mobile member 8 about an oscillation axis "A" substantially parallel to the longitudinal axis "X" of the shaft 2, so as to compensate its transversal excursion with respect to the axis of movement "Y" due to the eccentricity of the eccentric body 7, through slight oscillations about the oscillation axis "A".

In order to ensure alternating motion of the mobile member 8 together with the transversal excursion of the eccentric body 7 during the rotation of the shaft 2, the device 2 also comprises return means 17 operatively associated with the connection pin 13 to move the mobile member 8 towards the longitudinal axis "X" of the shaft 2 in accordance with the angular position of the eccentric body 7. In particular, the return means 17 preferably comprise at least two annular locking elements 18 operating at least on the connection pin 13 to keep this, the rolling bearings 11 and the eccentric body 7 joined together.

As can be seen in figure 3, each annular locking element 18 engages a respective longitudinal projection 13a of the connection pin 13, on the opposite side to the corresponding support portion 14, to keep the connection pin 13 joined to the respective rolling bearing 11 and to the eccentric body 7. In other words, each annular locking element 18 envelops the respective longitudinal projection 13a of the connection pin 13 to keep it adequately pressed against the outer ring 11b of the corresponding rolling bearing 11. In this way, during the rotation of the shaft 2, the connection pin 13 is driven by the eccentric body 7 away from the longitudinal axis "X" of the shaft 2 and taken back towards it by means of the annular locking elements 18 that keep it stuck to the rolling bearings 11.

Again with reference to figure 3, each annular locking element 18 extends substantially parallel to the shaft 2 to define an enveloping locking band. Advantageously, each annular locking element 18 has at least one covering portion 18a extending transversally with respect to the longitudinal axis "X" of the shaft 2. The covering portion 18a of each annular locking element 18 has a central opening 18b that allows it to move transversally without interception of the shaft 2.

In the example solution illustrated in figures 1 and 3, the device 1 is preferably equipped with an auxiliary mobile member 19 structurally identical to the mobile member 8 described above. The auxiliary mobile member 19 is operatively associated with the mobile member 8 to translate along the axis of movement "Y" according to alternating rectilinear motion.

Similarly to the mobile member 8, the auxiliary mobile member 19 engages the rolling bearings 11 through at least one connection pin 20, identical to the connection pin 13 of the mobile member 8.

In this case, each annular locking element 18 also engages a respective longitudinal projection 20a of the connection pin 20 of the auxiliary mobile member 19 on the opposite side to the respective rolling bearing 11 to keep the mobile members 8, 19, the connection pins 13, 20, the rolling bearings 11 and the eccentric body 7 joined together.

When the shaft 2 is made to rotate about its own longitudinal axis "X" together with the eccentric body 7 and the inner rings 11b of the rolling bearings 11, the connection pins 13, 20 and the corresponding mobile members 8, 19 are made to rotate along the axis of movement "Y" according to alternating rectilinear motion. More specifically, whereas the mobile member 8 and the respective connection pin 13 move away from the longitudinal axis "X" of the shaft 2 through the thrusting action of the eccentric body 7, the auxiliary mobile member 19 and the corresponding connection pin 20 move towards the longitudinal axis "X" of the shaft 2, pulled back by the annular elements 18.

Of course, the device 1 can be provided with various mobile members or pistons, arranged angularly around an eccentric body or else operatively associated with many cams distributed along the shaft 2.

Again with reference to figure 3, the device 1 also comprises a lubrication system 21 of all of the mobile components. In particular, the lubrication system 21 foresees the lubrication of the mobile members 8, 19 along the respective guide bushings 9, of the rolling bearings 11, of the eccentric body 7, of the return means 17 and the shaft 2. Preferably, the lubrication of the aforementioned components is carried out by means of deposition of lubricating grease.

Advantageously, the lubricating grease is packed inside the respective storage tanks 22 respectively formed inside the structure of each mobile member 8, 19.

In order to allow and facilitate the introduction of lubricating grease, each tank 22 has at least one access opening 23 facing the opposite way to the longitudinal axis "X" of the shaft 2.

At least one lubrication channel 24 extends from each tank 22, opening out into at least one respective peripheral groove 25 formed on the outside of the corresponding mobile member 8, 19. More specifically, four lubrication channels 24 extend from each tank 22, transversally with respect to the axis of movement "Y", in fluid communication with two respective peripheral grooves 25 formed on the outside of the respective mobile member 8, 19.

With particular reference to the example solution illustrated in the attached figures, the lubrication channels 24 are preferably arranged in pairs, aligned along a respective direction substantially parallel to the longitudinal axis "X" of the shaft 2 to open out into the same peripheral groove 25 on respectively opposite sides and, in pairs, one above the other according to substantially parallel directions, to open out into peripheral grooves 25 over one another. In this way, the lubricating grease present inside the tank 22 of each mobile member 8, 19 is free to flow through the lubrication channels 24 to grease them on the outside.

Again with reference to figure 3, a diffusion duct 26 extends from the tank 22 of each mobile member 8, 19, which ends at the respective through openings 15, to allow the lubricating grease to reach the respective connection pin 13, 20. Preferably, the diffusion duct 26 extends substantially parallel to the axis of movement "Y", and more preferably it extends along such an axis.

The aforementioned lubrication system 21 also has at least one transit duct 27 extending through each connection pin 13, 20 between the diffusion duct 26 of the respective mobile member 8, 19 and at least one respective support portion 14 or a rolling bearing 11.

Preferably, each connection pin 13, 20 has two transit ducts 27 extending substantially parallel to the axis of movement "Y" between the respective diffusion duct 26 and the respective rolling bearings 11.

The lubrication system 21 is also equipped with at least one channel 28 formed at least partially inside the eccentric body 7 and at least partially inside the shaft 2 according to an extension transversal to the longitudinal axis "X" of the latter between its axis and a respective rolling bearing 11.

In the example solution illustrated in figure 3, the lubrication system 21 comprises two channels 28 formed at least partially inside the eccentric body 7 and at least partially inside the shaft 2, according to directions of extension transversal to the longitudinal axis "X" of the latter.

In detail, each channel 28 extends between a respective rolling bearing 11 and the longitudinal axis "X" of the shaft 2, along which a main duct 29 is formed, closed by a greaser that is not represented in the figures, to allow periodic lubrication operations.

The device for transforming rotary motion into uniform rectilinear motion according to the present invention solves he problems encountered in the prior art and achieves important advantages.

First of all, the aforementioned device achieves the important advantage of operating without lubricating liquid baths, like for example oil and similar, which in situations of it being damaged and/or broken tend to pour out in large quantities into the surrounding environment. Indeed, the absence of sliding by means of the interposition of appropriate rolling bearings and of a pin between the eccentric body and the mobile members or pistons allows the use of a lubricating grease instead of the liquid oil. Consequently, in the case in which containment components break, like for example the very structure of the pumps with which such devices are normally associated, the lubricating grease tends to stay on the components of the device itself. This is particularly advantageous when mechanisms, like pumps or similar, used in sensitive environments, like for example agricultural land or other similar farming locations, are subject to damage to their containment structure. Indeed, the fact that no polluting substances leak out means that the surrounding environment is preserved at the same time avoiding expensive clean-up works.

It should also be noted that the structural configuration of the present device allows a substantial support surface between piston pin and piston, to the great advantage of the reliability and strength of the system.

## Claims

1. Device for transforming rotary motion into alternating rectilinear motion, in particular for pumps, preferably of the agricultural type, said device comprising:
- a shaft (2) that can be made to rotate about its own longitudinal axis ("X");
- at least one eccentric body (7) engaged on said shaft (2) to rotate as a unit with the latter about said longitudinal axis ("X");
- at least one mobile member (8) operatively associated with said eccentric body (7) to translate along an axis of movement ("Y") transversal to the longitudinal axis ("X") of said shaft (2);
the device further comprising rolling connection means (10) operatively arranged between said eccentric body (7) and said mobile member (8), said mobile member (8) engaging said rolling connection means (10) through at least one connection pin (13) **characterised in that** said connection pin (13) has at least one support portion (14) for said rolling connection means (10).

2. Device according to claim 1, wherein said rolling connection means (10) comprise at least two rolling bearings (11) operatively arranged between said eccentric body (7) and said connection pin (13).

3. Device according to claim 2, wherein said rolling bearings (11) are spaced apart along a direction substantially parallel to the longitudinal axis ("X") of said shaft (2) to define, together with said eccentric body (7), at least one corresponding annular groove (12).

4. Device according to claim 2 or 3, wherein each rolling bearing (11) comprises:
- an inner ring (11a) engaged at said eccentric body (7) to rotate as a unit with it about said longitudinal axis ("X") of said shaft (2);
- an outer ring (11b) engaged at said mobile member (8) to move it along said axis of movement ("Y") at least away from the longitudinal axis ("X") of said shaft (2);
- a plurality of rolling elements (11c), preferably spherical, operatively arranged between said inner ring (11a) and outer ring (11b) to allow a relative rotation between them about a rotation axis ("Z") substantially parallel to the longitudinal axis ("X") of said shaft.

5. Device according to claim 1, wherein each support portion (14) of said connection pin (13) is substantially shaped to fit together with the outer ring (11b) of a corresponding rolling bearing (11).

6. Device according to claim 5, wherein said connection pin (13) extends mainly substantially parallel to the longitudinal axis ("X") of said shaft (2) along a corresponding through opening (15) formed through said mobile member (8) transversally with respect to the axis of movement ("Y") thereof.

7. Device according to claim 6, wherein said connection pin (13) has at least one central portion (16) with a substantially circular section arranged between said support portions (14), said central portion (16) being enveloped by a semi-annular appendix (8a) of said mobile member (8) at least partially defining the through opening (15) of the latter.

8. Device according to any one of claims 5 to 7, wherein said connection pin (13) is engaged so that it can rotate in said through opening (15) of said mobile member (8) to oscillate about an axis ("A") substantially parallel to the longitudinal axis ("X") of said shaft (2).

9. Device according to claim 7 or 8, wherein said central portion (16) of said connection pin (13) and said semi-annular portion (8a) of said mobile member (8) lie at least partially in said annular groove (12) between said rolling bearings (11) and according to a lying plane substantially perpendicular to the longitudinal axis ("X") of said shaft (2).

10. Device according to any one of claims 5 to 9, also comprising return means (17) operatively associated with said connection pin (13) to move said mobile member (8) towards the longitudinal axis ("X") of said shaft (2) in accordance with the angular position of said eccentric body (7).

11. Device according to claim 10, wherein said return means (17) comprise at least two annular locking elements (18) operating at least one said connection pin (13) to keep this, said rolling bearings (11) and said eccentric body (7) joined together.

12. Device according to any one of claims 5 to 11, also comprising a lubrication system (21) of said mobile member (8), connection pin (13), rolling bearings (11), eccentric body (7), return means (17) and shaft (2), said lubrication system (21) operating by means of deposition of lubricating grease on the components of said device (1).

13. Device according to claim 12, wherein said lubrication system (21) comprises at least one storage tank (22) of lubricating grease, said storage tank (22) being formed inside said mobile member (8).

14. Device according to claim 12 or 13, wherein said lubrication system (21) comprises at least one lubrication channel (24) extending inside said mobile member (8) between said storage tank (22) and at least one respective peripheral groove (25) formed on the outside of said mobile member (8), said lubrication channel (24) extending transversally to the axis of movement ("Y") of said mobile member (8) to lubricate a respective guide (9) of said mobile member (8).

15. Device according to any one of claims 12 to 13, wherein said lubrication system (21) comprises at last one diffusion duct (26) of said lubricating grease extending inside said mobile member (8) between said storage tank (22) and said connection pin (13) to lubricate the latter, said diffusion duct (26) extending substantially parallel to the axis of movement ("Y") of said mobile member (8).

16. Device according to claim 15, wherein said lubrication system (21) comprises at least one transit duct (27) of said lubricating grease, extending through said connection pin (13) between said storage tank (22) and said at least one support portion (14) of said connection pin (13) or a rolling bearing (11), said transit duct (27) extending substantially parallel to the axis of movement ("Y") of said mobile member (8).

17. Device according to claim 16, wherein said lubrication system (21) also comprises at least one channel (28) formed at least partially inside said eccentric body (7) and at least partially inside said shaft (2), said channel (28) extending transversally to the longitudinal axis ("X") of said shaft (2) between a corresponding rolling bearing (11) and the longitudinal axis ("X") of said shaft (2).

18. Device according to claim 17, wherein said lubrication system (21) comprises a main duct (29) extending inside said shaft (2) along the longitudinal axis ("X") thereof, said main duct (29) being in fluid communication with said at least one channel (28).

19. Device according to any one of claims 12 to 18, comprising at least one auxiliary mobile member (19) operatively associated with said eccentric body (7) on the opposite side to said mobile member (8) to translate along the axis of movement ("Y"), said auxiliary mobile member (19) being identical to said mobile member (8).

20. Pump, in particular an agricultural pump, comprising at least one device (1) for transforming rotary motion into alternating rectilinear motion according to any one of the previous claims.

## Patentansprüche

1. Vorrichtung zur Umwandlung einer Drehbewegung in eine lineare hin- und hergehende Bewegung, besonders für Pumpen, bevorzugt für landwirtschaftliche Nutzung, wobei die Vorrichtung Folgendes umfasst:
- eine Welle (2), die sich um ihre Längsachse ("X") drehen kann;
- wenigstens ein Exzenter (7), der auf der Welle (2) angebracht ist, um sich zusammen mit dieser um die Längsachse ("X") zu drehen;
- wenigstens ein bewegliches Element (8), das in Wirkverbindung mit solchem Exzenter (7) verbunden ist, um eine Translationsbewegung längs einer zur Längsachse ("X") der Welle (2) quer liegenden Bewegungsachse ("Y") zu durchführen;
die Vorrichtung umfasst weiterhin wälzende Verbindungselemente (10), die wirksam zwischen dem Exzenter (7) und dem beweglichen Element (8) liegen, wobei besagtes bewegliches Element (8) mit wenigstens einem Verbindungsbolzen (13) in den wälzende Verbindungselemente (10) greift, wobei der Verbindungsbolzen (13) wenigstens einen Auflageabschnitt (14) für die wälzende Verbindungselemente (10) aufweist.

2. Vorrichtung nach Patentanspruch 1, bei der die wälzende Verbindungselemente (10) wenigsten zwei Rolllager (11) umfassen, die wirksam zwischen dem Exzenter (7) und dem Verbindungsbolzen (13) liegen.

3. Vorrichtung nach Patentanspruch 2, bei der sich die Rolllager (11) mit Abstand zueinander in einer im Wesentlichen parallel zur Längsachse ("X") der Welle (2) verlaufenden Richtung befinden und zusammen mit dem Exzenter (7) wenigstens eine entsprechende Ringnut (12) umgrenzen.

4. Vorrichtung nach Patentanspruch 2 oder 3, bei der jedes Rolllager (11) Folgendes umfasst:
einen Innenring (11a), der in dem Exzenter (7) greift und sich zusammen mit Letzterem um die Längsachse ("X") der Welle (2) dreht;
ein Außenring (11b), der in das bewegliche Element (8) greift, um Letzteres längs der Bewegungsachse ("Y") zumindest von der Längsachse ("X") der Welle (2) weg zu verschieben;
eine Vielzahl wälzender Elemente (11c), vorzugsweise kugelförmig, die wirksam zwischen dem Innenring (11a) und Außenring (11b) liegen, um zwischen Letzteren eine entsprechende Drehung um eine im Wesentlichen parallel zur Längsachse ("X") der Welle liegende Drehachse ("Z") zu ermöglichen.

5. Vorrichtung nach Patentanspruch 1, bei der jeder Auflageabschnitt (14) des Verbindungsbolzens (13) im Wesentlichen als Gegenform zum Außenring (11b) eines entsprechenden Rolllagers (11) ausgebildet ist.

6. Vorrichtung nach Patentanspruch 5, bei der Verbindungsbolzen (13) im Wesentlichen überwiegend parallel zur Längsachse ("X") der Welle (2) längs einer entsprechenden durchgehenden Öffnung (15), die durch das bewegliches Element (8) führt und quer zur Bewegungsachse ("Y") dieses Letzteren liegt, verläuft.

7. Vorrichtung nach Patentanspruch 6, bei der Verbindungsbolzen (13) wenigstens einen mittleren Abschnitt (16) aufweist, der im Wesentlichen kreisförmig ist und zwischen den Auflageabschnitten (14) liegt, wobei der mittlere Abschnitt (16) von einem Halbring (8a) des beweglichen Elements (8), der wenigstens teilweise die durchgehende Öffnung (15) dieses Letzteren umgrenzt, umfasst wird.

8. Vorrichtung nach einem beliebigen der Patentansprüche von 5 bis 7, bei der Verbindungsbolzen (13) drehbar in der durchgehender Öffnung (15) des beweglichen Elements (8) gelagert ist, damit er um eine im Wesentlichen parallel zur Längsachse ("X") der Welle (2) verlaufenden Achse ("A") schwingen kann.

9. Vorrichtung nach Patentanspruch 7 oder 8, bei der mittlerer Abschnitt (16) des Verbindungsbolzens (13) und der Halbring (8a) des beweglichen Elements (8) wenigstens teilweise in der Ringnut (12) zwischen den Rolllagern (11) und gemäß einer im Wesentlichen rechtwinklig zur Längsachse ("X") der Welle (2) verlaufenden Auflagefläche liegen.

10. Vorrichtung nach einem beliebigen der Patentansprüche von 5 bis 9, die außerdem Rückholelemente (17) umfasst, die wirksam dem Verbindungsbolzen (13) zugeordnet sind, um das bewegliches Element (8) in Übereinstimmung mit der Winkellage des Exzenters (7) näher an die Längsachse ("X") der Welle (2) zu verschieben.

11. Vorrichtung nach Patentanspruch 10, bei der Rückholmittel (17) wenigstens zwei ringförmige Spannelemente (18) umfassen, die wenigstens auf den Verbindungsbolzen (13) einwirken, um Letzteren, die Rolllager (11) und den Exzenter gegenseitig zusammenzuhalten.

12. Vorrichtung nach einem beliebigen Patentanspruch von 5 bis 11, die außerdem ein Schmiersystem (21) für das bewegliche Element (8), Verbindungsbolzen (13), Rolllager (11), Exzenter (7), Rückholmittel (17) und Welle (2) umfasst, wobei das Schmiersystem (21) mittels Ausbringung von Schmierfett auf den Komponenten der Vorrichtung (1) arbeitet.

13. Vorrichtung nach Patentanspruch 12, bei der das Schmiersystem (21) wenigstens einen Sammelbehälter (22) für Schmierfett umfasst, wobei der Sammelbehälter (22) im Inneren des beweglichen Elements (8) enthalten ist.

14. Vorrichtung nach Patentanspruch 12 oder 13, bei der das besagte Schmiersystem (21) wenigstens einen Schmierkanal (24) umfasst, der sich im Inneren des besagten beweglichen Elements (8) zwischen besagtem Sammelbehälter (22) und wenigstens einer entsprechenden peripheren Nut (25) erstreckt, die außerseitig auf das bewegliche Element (8) ausgebildet ist, wobei der Schmierkanal (24) quer zur Bewegungsachse ("Y") des beweglichen Elements (8) verläuft, um eine entsprechende Führung (9) des beweglichen Elements (8) zu schmieren.

15. Vorrichtung nach einem beliebigen Patentanspruch von 12 bis 13, bei der das Schmiersystem (21) wenigstens eine Verteilerleitung (26) für das Schmierfett umfasst, die sich im Inneren des beweglichen Elements (8) zwischen dem Sammelbehälter (22) und dem Verbindungsbolzen (13) erstreckt, um Letzteren zu schmieren, wobei die Verteilungsleitung (26) im Wesentlichen parallel zur Bewegungsachse ("Y") des beweglichen Elements (8) verläuft.

16. Vorrichtung nach Patentanspruch 15, bei der das Schmiersystem (21) wenigstens eine Durchgangsleitung (27) für das Schmierfett umfasst, die sich durch die Verbindungsbolzen (13) zwischen dem Sammelbehälter (22) und wenigstens einem Auflageabschnitt (14) des Verbindungsbolzens (13) oder einem Rolllager (11) erstreckt, wobei die Durchgangsleitung (27) im Wesentlichen parallel zur Bewegungsachse ("Y") des beweglichen Elements (8) verläuft.

17. Vorrichtung nach Patentanspruch 16, bei der das Schmiersystem (21) außerdem wenigstens einen Kanal (28) umfasst, der wenigstens teilweise im Inneren des Exzenters (7) und wenigstens teilweise im Inneren der Welle (2) enthalten ist, wobei das Kanal (28) sich quer zur Längsachse ("X") der Welle (2) zwischen einem entsprechenden Rolllager (11) und der Längsachse ("X") der Welle (2) erstreckt.

18. Vorrichtung nach Patentanspruch 17, bei der das besagte Schmiersystem (21) eine Hauptleitung (29) umfasst, die sich im Inneren besagter Welle (2) und längs der Längsachse ("X") der Letzteren erstreckt, wobei die Hauptleitung (29) in Fluidkommunikation mit wenigstens einem der Kanäle (28) in Verbindung steht.

19. Vorrichtung nach einem beliebigen der Patentansprüche von 12 bis 18, die wenigstens ein bewegliches Hilfselement (19) umfasst, das betriebsweise in Eingriff mit dem Exzenter (7) von der entgegengesetzten Seite hinsichtlich dem beweglichen Elements (8) steht, um eine Transationsbewegung längs der Bewegungsachse ("Y") zu durchführen, wobei das bewegliche Hilfselement (19) mit dem beweglichen Element (8) identisch ist.

20. Pumpe, insbesondere für landwirtschaftliche Nutzung, die wenigstens eine Vorrichtung (1) zur Umwandlung einer Drehbewegung in eine lineare hin- und hergehende Bewegung nach einem beliebigen der vorherigen Patentansprüche umfasst.

## Revendications

1. Dispositif de transformation d'un mouvement de rotation en un mouvement rectiligne alternatif, en particulier pour des pompes, de préférence de type agricole, ledit dispositif comprenant :
- un arbre (2) actionnable en rotation autour de son propre axe longitudinal ("X") ;
- au moins un corps excentrique (7) engagé sur ledit arbre (2) pour tourner solidairement avec celui-ci autour dudit axe longitudinal ("X") ;
- au moins un organe mobile (8) associé fonctionnellement audit corps excentrique (7) pour se déplacer par translation le long d'un axe de déplacement ("Y") transversal par rapport à l'axe longitudinal ("X") dudit arbre (2) ;
le dispositif comprenant en outre des moyens de roulement de liaison (10) interposés fonctionnellement entre ledit corps excentrique (7) et ledit organe mobile (8), ledit organe mobile (8) engageant lesdits moyens de roulement de liaison (10) au moyens d'au moins une broche (13) de connexion, **caractérisé en ce que** ladite broche de connexion (13) présente au moins une portion d'appui (14) pour lesdits moyens de roulement de liaison (10).

2. Dispositif selon la revendication 1, dans lequel lesdits moyens de roulement de liaison (10) comprennent au moins deux coussinets de roulement (11) interposés fonctionnellement entre ledit corps excentrique (7) et ladite broche de connexion (13).

3. Dispositif selon la revendication 2, dans lequel lesdits coussinets de roulement (11) sont écartés l'un de l'autre suivant une direction sensiblement parallèle à l'axe longitudinal ("X") dudit arbre (2) pour définir, conjointement audit corps excentrique (7), au moins une rainure annulaire (12) correspondante.

4. Dispositif selon la revendication 2 ou 3, dans lequel chaque coussinet de roulement (11) comprend :
un anneau interne (11a) engagé avec ledit corps excentrique (7) pour tourner solidairement avec ce dernier autour dudit axe longitudinal ("X") dudit arbre (2) ;
un anneau externe (11b) engagé avec ledit organe mobile (8) pour déplacer ce dernier le long dudit axe de déplacement ("Y") au moins en direction d'éloignement de l'axe longitudinal ("X") dudit arbre (2) ;
une pluralité d'éléments de roulement (11c), de préférence sphéroïdaux, interposés fonctionnellement entre lesdits anneaux interne (11a) et externe (11b) pour permettre une rotation relative entre ces derniers autour d'un axe de rotation ("Z") sensiblement parallèle à l'axe longitudinal ("X") dudit arbre.

5. Dispositif selon la revendication 1, dans lequel chaque portion d'appui (14) de ladite broche de connexion (13) est sensiblement profilé complémentairement à l'anneau externe (11b) d'un coussinet de roulement correspondant (11).

6. Dispositif selon la revendication 5, dans lequel ladite broche de connexion (13) s'étend principalement sensiblement parallèlement à l'axe longitudinal ("X") dudit arbre (2) le long d'une ouverture traversante correspondante (15) ménagée à travers ledit organe mobile (8) transversalement par rapport à l'axe de déplacement ("Y") de ce dernier.

7. Dispositif selon la revendication 6, dans lequel ladite broche de connexion (13) présente au moins une portion centrale (16) de section sensiblement circulaire interposée entre lesdites portions d'appui (14), ladite portion centrale (16) étant chevauchée par un appendice semi-annulaire (8a) dudit organe mobile (8) définissant au moins partiellement l'ouverture traversante (15) de ce dernier.

8. Dispositif selon l'une quelconque des revendications 5 à 7, dans lequel ladite broche de connexion (13) est engagée de manière rotative dans ladite ouverture traversante (15) dudit organe mobile (8) pour osciller autour d'un axe ("A") sensiblement parallèle à l'axe longitudinal ("X") dudit arbre (2).

9. Dispositif selon la revendication 7 ou 8, dans lequel ladite portion centrale (16) de ladite broche de connexion (13) et ladite portion semi-annulaire (8a) dudit organe mobile (8) sont disposées au moins partiellement dans ladite rainure annulaire (12) entre lesdits coussinets de roulement (11) et suivant un plan de disposition sensiblement perpendiculaire à l'axe longitudinal ("X") dudit arbre (2).

10. Dispositif selon l'une quelconque des revendications 5 à 9, comprenant en outre des moyens de rappel (17) associés fonctionnellement à ladite broche de connexion (13) pour déplacer ledit organe mobile (8) en direction de rapprochement vers l'axe longitudinal ("X") dudit arbre (2) conformément à la position angulaire dudit corps excentrique (7).

11. Dispositif selon la revendication 10, dans lequel lesdits moyens de rappel (17) comprennent au moins deux éléments annulaires de serrage (18) agissant au moins sur ladite broche de connexion (13) pour maintenir celle-ci, lesdits coussinets de roulement (11) et ledit corps excentrique (7) mutuellement unis.

12. Dispositif selon l'une quelconque des revendications 5 à 11 comprenant en outre un système de lubrification (21) dudit organe mobile (8), de la broche de connexion (13), des coussinets de roulement (11), du corps excentrique (7), des moyens de rappel (17) et de l'arbre (2), ledit système de lubrification (21) intervenant par dépôt de graisse lubrifiante sur les composants dudit dispositif (1).

13. Dispositif selon la revendication 12, dans lequel ledit système de lubrification (21) comprend au moins un réservoir d'accumulation (22) de graisse lubrifiante, ledit réservoir d'accumulation (22) étant ménagé à l'intérieur dudit organe mobile (8).

14. Dispositif selon la revendication 12 ou 13, dans lequel ledit système de lubrification (21) comprend au moins un canal de lubrification (24) s'étendant à l'intérieur dudit organe mobile (8) entre ledit réservoir d'accumulation (22) et au moins une rainure périphérique correspondante (25) ménagée extérieurement sur ledit organe mobile (8), ledit canal de lubrification (24) s'étendant transversalement à l'axe de déplacement ("Y") dudit organe mobile (8) pour lubrifier un guide correspondant (9) dudit organe mobile (8).

15. Dispositif selon l'une quelconque des revendications 12 à 13, dans lequel ledit système de lubrification (21) comprend au moins un conduit de diffusion (26) de ladite graisse lubrifiante s'étendant à l'intérieur dudit organe mobile (8) entre ledit réservoir d'accumulation (22) et ladite broche de connexion (13) pour lubrifier cette dernière, ledit conduit de diffusion (26) s'étendant sensiblement parallèlement à l'axe de déplacement ("Y") dudit organe mobile (8).

16. Dispositif selon la revendication 15, dans lequel ledit système de lubrification (21) comprend au moins un conduit de passage (27) de ladite graisse lubrifiante, s'étendant à travers ladite broche de connexion (13) entre ledit réservoir d'accumulation (22) et ladite au moins une portion d'appui (14) de ladite broche de connexion (13) ou un coussinet de roulement (11), ledit conduit de passage (27) s'étendant sensiblement parallèlement par rapport à l'axe de déplacement ("Y") dudit organe mobile (8).

17. Dispositif selon la revendication 16, dans lequel ledit système de lubrification (21) comprend en outre au moins un canal (28) ménagé au moins partiellement à l'intérieur dudit corps excentrique (7) et au moins partiellement à l'intérieur dudit arbre (2), ledit canal (28) s'étendant transversalement à l'axe longitudinal ("X") dudit arbre (2) entre un coussinet de roulement correspondant (11) et l'axe longitudinale ("X") dudit arbre (2).

18. Dispositif selon la revendication 17, dans lequel ledit système de lubrification (21) comprend un conduit principale (29) s'étendant à l'intérieur dudit arbre (2) suivant l'axe longitudinal ("X") de ce dernier, ledit conduit principale (29) étant en communication de fluide avec ledit au moins un canal (28).

19. Dispositif selon l'une quelconque des revendications 12 à 18, comprenant au moins un organe mobile auxiliaire (19) associé fonctionnellement audit corps excentrique (7) du côté opposé par rapport audit organe mobile (8) pour se déplacer par translation le long de l'axe de déplacement ("Y"), ledit organe mobile auxiliaire (19) étant identique audit organe mobile (8).

20. Pompe, en particulier agricole, comprenant au moins un dispositif (1) de transformation d'un mouvement de rotation en un mouvement rectiligne alternatif selon l'une quelconque des revendications précédentes.
